Europäisches Patentamt

(19) European Patent Office

Office européen des brevets

(11) Publication number: **0 260 116**
**A2**

## (12) EUROPEAN PATENT APPLICATION

(21) Application number: **87307954.5**

(22) Date of filing: **09.09.87**

(51) Int. Cl.⁴: **A 21 B 3/02**

(30) Priority: **11.09.86 GB 8621877**

(43) Date of publication of application:
**16.03.88 Bulletin 88/11**

(84) Designated Contracting States:
**AT BE CH DE ES FR GB GR IT LI LU NL SE**

(71) Applicant: **AKTIEBOLAGET ELECTROLUX**
**Luxbacken 1**
**S-105 45 Stockholm (SE)**

(72) Inventor: **Buttery, Michael Harcourt**
**7, Greenways Heath Drive Walton-on-the-Hill**
**Tadworth Surrey, KT20 7QE (GB)**

**Brooks, Steve Martin**
**16 The Drive**
**Chingford London, E4 7AH (GB)**

**Crossley, Peter William**
**28 Glass Avenue**
**Ushaw Moor Co. Durham (GB)**

**Watroba, David Brian**
**15 Haselor Road Boldmere**
**Sutton Coldfield, B73 5DW (GB)**

(74) Representative: **Arthur, Bryan Edward et al**
**4 Dyers Buildings Holborn**
**London, EC1N 2JT (GB)**

(54) Oven doors.

(57) The present invention relates to oven doors which can be used in the manufacture of a variety of ovens including gas, electric and microwave ovens. In more detail, an oven door according to the present invention is characterised in that the door comprises a main body section dimensioned to fit generally closely in the aperture of an oven, the body section having a portion arranged to be removable to provide a passageway substantially transverse to the major plane of the door, and in that a substantially rigid front panel is attachable to the exterior face of the main body section.

FIG.1

EP 0 260 116 A2

**Description**

OVEN DOORS

The present invention relates to oven Doors.

Conventionally an oven door with a window has a wholly different construction to that of a oven door havng no window. Moreover even a windowed door may have one of two widely differing constructions depending on whether it is for a mircrowave oven (in which case transmission of microwave radiation must be prevented) or for any other form of oven. Thus any oven manufacturer who wishes to have a wide range of ovens is required to produce a wide variety of oven doors, requiring substantial stock-piling of each type of door if the production lines for all types of oven are to be kept running. Moreover, it may be difficult to provide all the different types of oven in a range with an uniform outward appearance.

An object of the present invention is to provide a construction of oven door which can be used in the manufacture of a variety of ovens.

The present invention provides a door for an oven, the door comprising a main body section dimensioned to fit generally closely in the aperture of an oven, the body section having a portion arranged to be removable to provide a passageway substantially transverse to the major plane of the door, and a substantially rigid front panel for attachment to the exterior face of the main body section.

The front panel ensures that the door is adequately sturdy and can be provided with a design or colour to give the oven a distinctive appearance. Thus the front panel readily enables the door to be in accordance with a particular style associated with other doors or kitchen surfaces.

The front panel may comprise a frame section supporting a sheet of transparent material; alternatively, the front panel may comprise a sheet of transparent material, optionally with border region which is opaque (for example rendered so by painting or abrasion). Under these circumstances, the panel is suited for use in a windowed door. To produce a windowed door for use in association with a gas-or electric-fuelled oven, the panel is combined with a main body section whose removable part has been discarded; also preferably a sheet of transparent material is fixed to the interior major face of the main body section. To produce a windowed door for use in association with a microwave oven, the removable part of the main body section is discarded and a sheet of material to prevent transmission of microwave radiation is placed over the resultant passageway in the main body section.

Preferably the body section has means to support barrier means to inhibit thermal and/or microwave transmission through a passageway in the body section. Preferably the support means comprises a recess in the body section to accommodate a sheet of appropriate material.

The present invention also provides a method of manufacturing a door for an oven, the method comprising forming a main body section dimensioned to fit generally closely in the aperture of an oven, the body section having a portion arranged to be removable to provide a central passageway substantially transverse to the major plane of the door, and attaching a substantially rigid front panel to the exterior face of the main body section.

According to another aspect, the present invention provides a door for an oven, the door comprising a main body section dimensional to fit generally closely in the aperture of an oven, the body section having a flange extending laterally from edge faces of the door to abut the exterior periphery of an oven aperture when the door is in a closed position in relation to that oven aperture, and sealing means on the flange to effect sealing between the flange and that periphery when the door is in that closed position.

In order that the invention may more readily be understood, a description is now given by way of example only, reference being made to the accompanying drawings in which:-

Figure 1 is a cross-sectional elevation view of part of a door embodying the present invention;

Figure 2 is a cross-sectional elevation view of a door embodying the present invention; and

Figure 3 is a cross-sectional elevation view of another door embodying the present invention.

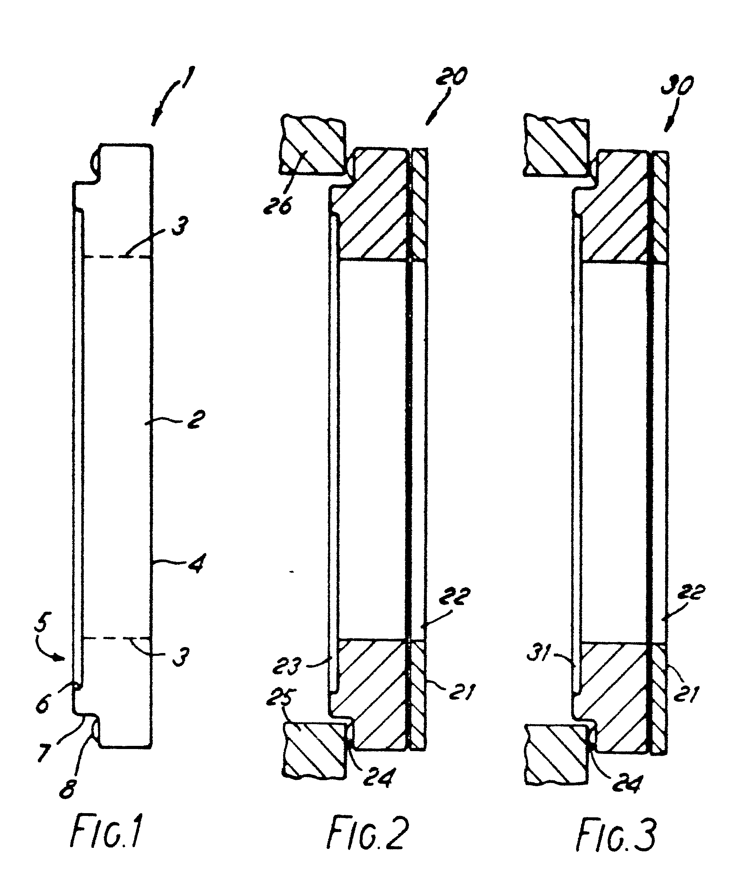

There is shown in Figure 1 a basic door unit 1 which may be used to produce all the different types of door which may be required, namely a plain door for gas/electric ovens, a windowed door for gas/electric ovens and a windowed door for microwave ovens. Unit 1 has a region 2 (whose boundary is indicated in Figure 1 by the broken line 3) which is formed to be readily removable if required.

Removal of the region 2 provides a passageway between the two major faces of unit 1 and forms the basis of a window. One major face 4 of unit 1 is substantially flat, and the other major face 5 has a central recess 6 of a size and location to receive a sheet of material to fully overlie the boundary of the region 2, and a peripheral groove 7 on one side of which a sealing ring 8 can be fixed.

To produce a plain door for a gas or electric oven, a sturdy front panel is fixed to face 4 of a unit 1, then hinges and a handle are attached and rubber beading is glued to the side of groove 7 along its entire length to form seal ring 8. The exterior face of the panel provides the decorative effect of the door, and hence this construction enables the manufacturer to readily offer a wide selection of decorations.

Figure 2 shows a windowed door 20 for a gas or electric oven, this door being formed by discarding region 2 from a door unit 1, fixing a front panel 21 with the transparent section 22 such that the latter overlies the resultant passageway in the door unit, and fixing a transparent plate 23 into recess 5 of the door unit. Thereafter hinges and handles (not shown) are attached, and sealing ring 24 is applied.

Panel 21 may comprise a rigid metal frame which supports a sheet of transparent material. Alternatively it may be a sturdy sheet of transparent material, part of which is made opaque by painting.

Figure 2 shows the door 20 when closed over the oven aperture and thereby abutting the oven floor 25 and top wall 26. As can ready be seen, the configuration of the door and the location of its seal ensures that there is a substantial length over which the surfaces of the door and the oven interface. In this way the design minimises the amount of temperature drop per unit thickness which must be achieved by the door in that vicinity. Also, as sealing ring 24 is located remote from the oven interior, it is subject to minimal thermal degradation.

The location of sealing ring 24 ensures effective sealing of door 20 even for variations in the dimensions of the oven aperture which might occur during manufacture of the oven.

There is shown in Figure 3 a windowed door 30 for a microwave oven. Door 30 is produced from a door unit 1 in substantially the same manner as door 20, except that a perforated sheet 31, of electrically conductive material is placed in recess 5 in order to prevent microwave radiation from passing through the window. A quarter-wave choke and ferrite strip are provided around the door to keep microwave leakage to a minimum and within allowable limits.

## Claims

1. A door for an oven, characterised in that the door comprises a main body section dimensioned to fit generally closely in the aperture of an oven, the body section having a portion arranged to be removable to provide a passageway substantially transverse to the major plane of the door, and in that a substantially rigid front panel is attachable to the exterior face of the main body section.

2. A door according to claim 1 characterised in that the front panel comprises a frame section supporting a sheet of transparent material.

3. A door according to claim 1 characterised in that the front panel comprises a sheet of transparent material having an opague peripheral border region.

4. A door according to claim 1 for a micro oven characterised in that the removable part is discarded and in that the so formed passageway is closed by a sheet of material possessing characteristics to prevent transmission of microwave radiation.

5. A door according to claim 4 characterised in that the body section includes means to support barrier means to inhibit thermal and/or microwave transmission through the passageway in the body section.

6. A door according to claim 5 characterised in that the support means is a recess formed in the body section and in that the barrier means is in the form of sheet material located in the recess.

7. A method of manufacturing a door for an oven characterised in that the method comprises forming a main body section dimensioned to fit generally closely in the aperture of an oven, the body section having a portion arranged to be removable to provide a central passageway substantially transverse to the major plane of the door, and attaching a substantially rigid front panel to the exterior face of the main body section.

8. A door for an oven, characterised in that the door comprises a main body section dimensioned to fit generally closely in the aperture of an oven, in that the body section has a flange extending laterally from edge faces of the door to abut the exterior periphery of an oven aperture when the door is in a closed position in relation to that oven aperture, and in that sealing means applied to the flange effects sealing between the flange and the said periphery when the door is in that closed position.

0260116

FIG.1    FIG.2    FIG.3